# EUROPEAN PATENT APPLICATION

(11) **EP 2 062 930 A1**
(43) Date of publication of application: **27.05.2009**
(21) Application number: 07022720.2
(22) Date of filing: 23.11.2007
(51) Int. Cl.: C08J 3/24, B29C 39/38, B29C 35/02

(54) **Method and resin system for producing plastics mouldings having a cured plastics matrix**

(71) Applicant: Fraunhofer-Gesellschaft zur Förderung der angewandten Forschung e.V., 80686 München (DE); AIMPLAS - Asociación de Investigación de Materiales Plásticos y Conexas, 46980 Paterna-Valencia (ES)
(72) Inventor: Emmerich, Rudolf Dr., 76456 Kuppenheim (DE); Varan, Liliana, Chamudis, 46015 Valencia (ES); Asensi, Inma, Roig, 46680 Algemesi-Valencia (ES)
(74) Representative: Lenz, Steffen

(57) **Abstract**

The invention provides for a method for producing plastics mouldings having a cured plastics matrix, the method comprising the steps of providing a form tool and filling said form tool with a resin system, said resin system comprising one or more curable resin components such as monomers, dimers, oligomers or the like being capable of polymerise thereby forming the cured plastics matrix of the plastics moulding. Moreover the resin system comprises a first activator being capable of initiating the polymerisation reaction when heated on a first temperature of activation as well as a second activator being capable of reacting exothermically thereby generating heat when heated on a second temperature of activation, the second temperature of activation being lower than the first temperature of activation, wherein the percentage of the second activator is chosen such that the first activator is activated substantially completely by means of the exothermic heat generated by the second activator. The resin system is heated on a temperature which corresponds to the second temperature of activation or higher, in order to activate the second activator, so that the first activator is activated as a result of the exothermic reaction of the second activator thereby initiating the polymerisation reaction in order to polymerise the resin thereby forming the plastics moulding.

## Description

The present invention relates to a method for producing plastics mouldings having a cured plastics matrix, the method comprising the following steps:
- providing a form tool;
- filling said form tool with a resin system, said resin system comprising at least one curable resin component such as a monomer, dimer, oligomer or the like being capable of polymerise thereby forming the cured plastics matrix of the plastics moulding as well as at least one first activator, the first activator being capable of initiating the polymerisation reaction when heated on a first temperature of activation;
- heating the resin system on a temperature which is sufficient to activate the first activator, i.e. which corresponds to the first temperature of activation or higher, in order to polymerise the resin thereby forming the plastics moulding.

Moreover, the invention is directed to a resin system for producing plastics mouldings having a cured plastics matrix, said resin system comprising:
- at least one curable resin component such as a monomer, dimer, oligomer or the like being capable of polymerise thereby forming the cured plastics matrix of the plastics moulding; and
- at least one first activator, the first activator being capable of initiating the polymerisation reaction when heated on a first temperature of activation,

In addition, the invention concerns a use of such resin system being processed by a method as defined above.

The production of plastics mouldings using curable resins such a monomers, dimers, oligomers or the like being capable of polymerise thereby forming the plastics matrix of the moulding usually implements a suitable activator or initiator which is adapted to initiate the polymerisation reaction when heated on a given temperature of activation. Depending on the type of polymerisation reaction, e.g. cationic, anionic or radicalic, the activator or initiator is capable of forming an activated species such as a cation, an anion or a radical which in turn is able to start the polymerisation reaction by reacting with a molecule of the curable resin component(s) (chain starting reaction), wherein the reaction product of the activator or initiator and the resin molecule is able to react with further molecules of the curable resin component(s) (chain growth reaction). Examples of conventional activators are, e.g., amides, alcoholates, alkoxides, cyanides, organometallic components etc. (anionic), sufficiently strong acids etc. (cationic), or peroxides, hydroperoxides, azo compounds (radicalic) etc.

Examples of suitable resin components being producible by thermoset reactions in the above manner are, e.g., bi or multifunctional carboxylic acids or anhydride and bi or multifunctional alcohols for producing polyesters, bi or multifunctional isocyanates and bi or multifunctional alcohols for producing polyurethanes, formaldehyde and, if need be, melamine, phenol and/or urea for producing (melamine/phenol/urea) formaldehyde condensation products etc. If bifunctional resin components including resin components having only one polymerisable double bond are used, additional components such as monomers being capable of cross-linking the polymers produced can be employed in order to provide for the formation of a three-dimensional network of the cured resin, the chains thereof being cross-linked with each other. For example, if unsaturated polyesters are formed by thermoset reactions between a bifunctional acid or anhydride (e.g., maleic, phthalic, isophthalic, terephthalic, fumaric etc.) and a bifunctional alcohol (e.g., ethylene glycol, diethylene glycol, (di)propylene glycol, neopentyl glycol etc.) according to the formula below

HOOC-R₁-COOH + HO-R₂-OH ---> -[R₂-O-CO-R₁-CO-O]-,

at least some of the acid or anhydride double bonds in the molecule can be used for a cross-linking between several molecules by adding a cross-linking agent such as styrene or the like being capable of reacting with the unsaturated double bonds in the polyester thereby producing a cross-linked polyester. As the polycondensation reaction or, generally speaking, the polymerisation reaction itself, the cross-linking reaction can be triggered by heat. In this regard, it is pointed out that the term "polymerisation" as used herein is also intended to be directed on the formation of a cured plastics matrix by polyaddition, polycondensation etc.

For activating the activator or initiator in order to start the polymerisation reaction and to cure the resin system thereby forming the cured plastics matrix of the moulding, the form tool being filled with the resin system is heated either convectively by means of heating wires or tubes being provided in the form tool or by means of an outer convector, or the resin system is heated by means of exposure to high-frequency electromagnetic radiation, the frequency and wavelength of the radiation preferably being in the range of microwaves, i.e. between approximately 300 MHz and 300 GHz and between approximately 1 mm and 1 m, respectively, although said parameters may vary in a broader range dependent on the respective resin system. One problem of the activation especially consists in that a substantially uniform heating is hardly achievable neither with conventional heating methods nor with the provision of high-frequency electromagnetic radiation which in turn may lead to an inhomogeneous and not reproducible curing process, i.e. the chain length and/or cross-linking of the cured plastics matrix may vary throughout the produced plastics moulding leading to inhomogeneous material properties. In the event of a convective heating, the heat takes some time to be transferred from the circumferential area of the cavity of the form tool into its central area. On the other hand, in case of radiating the form tool with high-frequency electromagnetic radiation such as microwaves, the microwaves will tend to penetrate the resin system up to a certain depth depending on its transmissibility for microwaves, but, as is known, a basic problem of the heating by means of microwaves consists in that a rather inhomogeneous temperature distribution is achieved in the material being heated as conventional microwave incoupling means or antennas in the form of substantially rectangular or cylindrical wave guides and the like usually emit a rather acute "jet", in the centre thereof the material tends so get overheated whereas in the circumferential area of this "jet" no significant heating occurs. Furthermore, the radiation field itself generated by a microwave incoupling means or antenna of a source of radiation being capable of generating microwaves, e.g. a magnetron, klystron or the like, tends to be rather inhomogeneous. Moreover, as heating of a material by means of microwaves is dependent on its material properties, e.g. density, water content, material type and especially absorption capacity for microwaves, it is practically impossible to provide for a substantially homogeneous heating of the material by means of high-frequency electromagnetic radiation.

The problems above with regard to an inhomogeneous heating of the resin system and an inhomogeneous curing/cross-linking of the resin associated with an inhomogeneous heating thereof especially occur in connection with the production of comparatively large-scale plastics mouldings such as boats or hulls, blades of windmills, pipes and the like which should be formed in one piece and which usually comprise fibrous material for reinforcement purposes such as glass fibres, carbon fibres etc. being impregnated with the resin system during the filling process of the form tool, e.g., by means of the so-called resin infusion process. In particular, the resin systems of such relatively huge parts which in use have to withstand considerable external forces have to be cured or cross-linked under very strict processing conditions due to the need of having a homogeneous and reproducible as possible polymerisation of the resin which can even make it necessary to formulate the resin system batch-wise by manual preparation, suitably together with an appropriate fibrous material for reinforcement purposes. As neither an exposure of the resin system to high-frequency electromagnetic radiation such as microwaves nor a convective heating of the resin system (which besides would be too energy consuming and thus too expensive) can provide for a substantially homogenous and reproducible heating of the resin for initiating curing or cross-linking thereof, the latter is conventionally accomplished at ambient temperature over a long period of time. For this reason, the manufacturer of such parts has to tailor a resin formulation for the processing (mixing of the resin components, additives, reinforcement fibres etc.) as well as for the curing at ambient temperature. However, while for the processing a rather low viscosity of the resin is beneficial (small molecules, short chain length, substantially no cross-linking) in order to provide for a homogeneous mixture and for a complete impregnation of reinforcement fibres, for the subsequent curing or cross-linking a fast polymerisation of the resin is advantageous which induces a strong increase of the viscosity, and therefore impregnation properties as well as mixing properties decrease drastically. Accordingly, if no change in boundary conditions, e.g. temperature, between the filling process of the mould and the curing or cross-linking process can be performed, the resin formulation has to fulfil conflicting conditions.

In particular, in connection with the production relatively large plastics mouldings of the type mentioned above, the following problems are posed:
- Need of specific room climate (e.g., room temperature of about 15°C) in the whole production hall or hangar where the resin is casted and cured;
- Strong dependency of the resin properties on variation of temperature and, as the case may be, humidity (summer/ winter, open doors in the production hall etc.);
- Need of a batch-wise formulation of the resin due to the problem of (partial) polymerisation while processing;
- Long curing time of about 12 hours or more (due to a necessary compromise to the processing needs of the resin such as a low viscosity);
- High degree of harmful or toxic, environmentally hazardous VOC (volatile organic carbon) emissions such as, e.g., styrene during processing and curing;
- Possible spiral downward impregnation of reinforcement fibres by the resin due to an undesired start of polymerisation;
- Shape filling problems due to an undesired start of polymerisation;
- Need of manual rework in order to impregnate the whole fibrous structure by the resin;
- Need of manual rework of the cured plastics moulding due to discontinuities, in particular of the surface, etc.

It is therefore an object of the present invention to provide a method and a resin system for the production of especially comparatively large-scale plastics mouldings having a cured plastics matrix of the type mentioned by way of introduction, where the above drawbacks are wholly or at least partially eliminated and which are adapted for a substantially homogeneously and reproducibly curing of the resin system.

On the one hand, this object is achieved by a method as defined by way of introduction, the method being characterised in that said resin system comprises at least one second activator, the second activator being capable of reacting exothermically thereby generating heat when heated on a second temperature of activation, the second temperature of activation being lower than the first temperature of activation of the first activator, wherein the percentage of the second activator is chosen such that the first activator is activated substantially completely by means of the exothermic heat generated by the second activator, and wherein the resin system is heated on a temperature which corresponds to the second temperature of activation or higher, in order to activate the second activator, so that the first activator is activated as a result of the exothermic reaction of the second activator.

On the other hand, the above object is achieved by a resin system as defined by way of introduction, the resin system being characterised in that it comprises at least one second activator, the second activator being capable of reacting exothermically thereby generating heat when heated on a second temperature of activation, the second temperature of activation being lower than the first temperature of activation of the first activator, wherein the percentage of the second activator is chosen such that the first activator is activated substantially completely by means of the exothermic heat generated by the second activator.

Finally, as indicated above, the present invention provides for a use of a resin system of the type mentioned above being processed by a method as aforementioned for producing rather large-scale plastics mouldings or products such as boats or hulls, blades of windmills, pipes and the like, in order to overcome the problems involved especially in connection with the manufacturing of such large-scale structural parts.

The present invention makes it possible to provide for a very continuous and reproducible curing and/or cross-linking of the resin system due to the fact that the (first) activator or initiator does not need to be activated as homogeneously as possible as it is the case in connection with conventional resin systems, because the first activator is activated by the heat generated by the second activator which in turn only needs to activated partially in order to start its exothermic reaction. The second activator then generates heat in the manner of a chain reaction sufficient to activate the second activator also in areas of the resin system being received in the form tool which could not have been heated externally, e.g. in central areas of the resin system being located away from the surface of the form tool, which leads to a substantially spontaneous and homogeneous activation of the first initiator all-over the resin system to be cured without the need of heating these areas by external heating devices. Moreover, as the necessary demand of heat for activating the activators is reduced and the resin system does not have to be heated completely, the risk of a local overheating as well as the energy consumption are reduced. It goes without saying that both the first and the second activator preferably should be substantially homogeneously dispersed in the resin system so that a uniform activation of the first activator will take place due to the exothermic heat generated by the second activator.

In order to provide for a low energy demand and to reduce the risk of a local overheating of the resin it may be advantageous when the resin system is heated on a temperature which corresponds to the second temperature of activation or higher, but which is lower than the first temperature of activation.

Whereas the second activator according to the invention basically only has to meet the criteria of being adapted to generate sufficient heat in order to activate the first activator without negatively affecting the curing and/or cross-linking process, i.e. the polymerisation of the resin system, in an embodiment of the invention, both the first and second activator are capable of initiating the polymerisation reaction of the resin when heated on their respective temperature of activation.

Especially, at least the first activator, in particular also the second activator, is thermally degradable thereby forming a reaction product being capable of initiating the polymerisation reaction of the resin, wherein at least the first activator, preferably also the second activator, is capable of being decomposed in at least one radical or ion. Accordingly, depending on the type of polymerisation reaction, e.g. cationic, anionic or radicalic, both the first and second activator may be capable of forming an activated species such as a cation, an anion or a radical which in turn is able to start the polymerisation reaction by reacting with a molecule of the curable resin component(s), and both the first and second activator may be chosen among previously known activators or initiators as mentioned above. In this regard it is pointed out that the term "activator" as used herein is intended to refer to any suitable activators, initiators, hardeners or curing agents.

Naturally, further additives such as promoters, inhibitors, cross-linking agents and the like may be added to the resin system according to requirements.

Moreover, as already indicated, a fibrous material in the form of bulk fibres and/or in the form of layers such as textiles, e.g. woven or knitted fabrics, non-woven material, mats and the like, can be disposed in the form tool, wherein the fibrous material is impregnated with the resin system before polymerising the resin for reinforcement of the produced plastics moulding.

The invention especially enables the use of high-frequency electromagnetic radiation in order to initiate the curing or cross-linking process of the resin system thereby preventing the resin system from being cured inhomogeneously or from being overheated locally, i.e. the second activator can be activated by means of exposure to high-frequency electromagnetic radiation, in particular microwaves. In this regard, a radiation device can be used being provided with an array consisting of a plurality of incoupling means such as microwave antennas like rectangular or cylindrical waveguides, the heating zone of at least some of the antennas preferably overlapping each other, in order to ensure also a very homogeneous heating of the resin. Said device is preferably displaceable relative to the form tool, e.g. by means of guide rails, robots, portal cranes etc., so that it can be moved over the entire form tool or mould in order to initiate curing/cross-linking of the resin, even if the mould has considerable dimensions in the range of, e.g., 10 m or more for producing large-scale plastics mouldings.

In order to enhance the absorbance of the resin system in regard to high-frequency electromagnetic radiation such as microwaves, at least one additive being capable of enhancing the absorbance of the resin system can be added, the additive in particular being in a fluid, preferably in a liquid form, as powdery materials tend to influence the infusion process of the resin into the form tool negatively. Examples of possible additives being able to enhance the microwave absorbance of the resin are (among others) glycols and related compounds such as diethylene glycol, ethylene glycol ethyl ether, polyethylene glycol etc., phthalates such as dibutyl, diisodecyl, diisononyl, dioctyl, butyl benzyl phthalate etc., isocyanates such as 2,4-tuloene diisocyanate, 1-naphthyl isocyanate etc., amines such as triethylamine, diphenylamine, hexamethylene tetramine etc. Of course, alternatively or additionally, at least some of the resin components themselves participating in the polymerisation reaction can be selected such that the microwave absorbance of the entire resin system is increased.

The invention will now be described purely exemplary in more detail by way of an example of a method for producing a large-scale plastics moulding in one piece, e.g. in the form of a blade for a wind power plant, having a fibre-reinforced, cured plastics matrix.

### Example:

In order to produce a blade for a wind power plant in one piece consisting of a fibre-reinforced thermosetting plastics matrix, a form tool is provided having a cavity being complementary to that of the blade. The cavity is equipped with a fibrous material, e.g. carbon fibre mats, and is subsequently filled with a homogenised resin system, e.g. by means of resin infusion technology, at ambient temperature of about 15°C to 20°C, wherein the fibrous material is impregnated by the resin, the latter being in a liquid state and comprising a low viscosity. An example for a suitable resin system for the formation of a cross-linked polyester is given below:

Resin system:
- 95 wt.-% isophthalic acid (1,3-benzenecarboxylic acid, IPA), and
- 5 wt.-% polyethylene glycol (PEG 200) as polymerisable resin components;
- 35 wt.-% styrene (based on 100% IPA/PEG 200) as cross-linking agent for the polyester chains;
- 0,8 wt.-% (based on 100% IPA/PEG 200) tert-butyl perbenzoate ("Trigonox 93^{™}" , *Akzo Nobel*), and
- 0,4 wt.-% (based on 100% IPA/PEG 200) tert-butyl peroctoate (tert-butyl peroxy-2-ethylhexanoate, "Trigonox
21^{™}" , *Akzo Nobel*)
as first and second activator, respectively;
- 1 wt.-% (based on 100% IPA/PEG 200) cobalt(II) octoate (cobalt (II) 2-etylhexanoate, "NL-49 P^{™}", *Akzo Nobel*)
as accelerator, and
- 0,2 wt.-% (based on 100% IPA/PEG 200) 1,4-diazabicyclooctane
as further additive (catalyst).

For the subsequent curing and cross-linking of the resin system, a radiation device is provided, said radiation device being equipped with an array consisting of a plurality of microwave antennas, the heating zone of adjacent antennas preferably overlapping each other, in order to ensure a homogeneous heating of the resin. The device is suitably arranged such that its array of microwave antennas extends over substantially the whole width of the form tool, while the device is guidably mounted on guide rails in order to be movable over the entire length of the form tool.

The curing/cross-linking of the resin system is, e.g., structured in three subsequent steps. In a first step, the microwave power of each antenna is adjusted to about 500 W. The array of microwave antennas is moved over the entire length of the form tool in order to heat the resin system substantially homogeneously to about 50°C and to thereby initiate the first and second activator to decompose thermally and to initiate the curing/cross-linking process, respectively, in a very homogeneous and reproducible manner. In a second step, immediately after the first step, the array of microwave antennas is moved over the entire length of the form tool once again, but now with a microwave power of each antenna of only a few Watts, e.g. about 5 to 10 W, in order to equalise colder zones in the resin, if any. In a third step, after the curing/cross-linking process is completed after less than 1 hour, the array of microwave antennas is displaced over the form tool again in order to heat the resin especially in the edges of the form tool to ensure a complete curing of the resin and to avoid that residual resin components remain in the produced plastics matrix of the moulding without having been polymerised. The latter can be accomplished by adjusting the microwave power of each microwave antenna again to approximately 500 W.

Finally, the reinforced plastics moulding is allowed to cool off and is removed from the form tool by means of a suitable lifting device such as a crane in order to be shipped of to be assembled on-site.

## Claims

1. A method for producing plastics mouldings having a cured plastics matrix, the method comprising the following steps:
- providing a form tool;
- filling said form tool with a resin system, said resin system comprising at least one curable resin component such as a monomer, dimer, oligomer or the like being capable of polymerise thereby forming the cured plastics matrix of the plastics moulding as well as at least one first activator, the first activator being capable of initiating the polymerisation reaction when heated on a first temperature of activation;
- heating the resin system on a temperature which is sufficient to activate the first activator, i.e. which corresponds to the first temperature of activation or higher, in order to polymerise the resin thereby forming the plastics moulding,
**characterised in that** said resin system comprises at least one second activator, the second activator being capable of reacting exothermically thereby generating heat when heated on a second temperature of activation, the second temperature of activation being lower than the first temperature of activation of the first activator, wherein the percentage of the second activator is chosen such that the first activator is activated substantially completely by means of the exothermic heat generated by the second activator, and wherein the resin system is heated on a temperature which corresponds to the second temperature of activation or higher, in order to activate the second activator, so that the first activator is activated as a result of the exothermic reaction of the second activator.

2. A method as claimed in claim 1, wherein the resin system is heated on a temperature which corresponds to the second temperature of activation or higher, but which is lower than the first temperature of activation.

3. A method as claimed in claim 1 or 2, wherein both the first and second activator are capable of initiating the polymerisation reaction of the resin when heated on their respective temperature of activation.

4. A method as claimed in any one of claims 1 to 3, wherein at least the first activator, in particular also the second activator, is thermally degradable thereby forming a reaction product being capable of initiating the polymerisation reaction of the resin.

5. A method as claimed in any one of claims 1 to 4, wherein at least the first activator, preferably also the second activator, is capable of being decomposed in at least one radical or ion.

6. A method as claimed in any one of claims 1 to 5, wherein further additives such as promoters, inhibitors, cross-linking agents and the like are added to the resin system.

7. A method as claimed in any one of claims 1 to 6, wherein a fibrous material is disposed in the form tool, wherein the fibrous material is impregnated with the resin system before polymerising the resin.

8. A method as claimed in any one of claims 1 to 7, wherein the second activator is activated by means of exposure to high-frequency electromagnetic radiation, in particular microwaves.

9. A method as claimed in any one of claims 1 to 8, wherein at least one additive being capable of enhancing the absorbance of the resin system in regard to high-frequency electromagnetic radiation is added to the resin system, the additive in particular being in a fluid form.

10. A resin system for producing plastics mouldings having a cured plastics matrix, said resin system comprising:
- at least one curable resin component such as a monomer, dimer, oligomer or the like being capable of polymerise thereby forming the cured plastics matrix of the plastics moulding; and
- at least one first activator, the first activator being capable of initiating the polymerisation reaction when heated on a first temperature of activation,
**characterised in that** the resin system comprises at least one second activator, the second activator being capable of reacting exothermically thereby generating heat when heated on a second temperature of activation, the second temperature of activation being lower than the first temperature of activation of the first activator, wherein the percentage of the second activator is chosen such that the first activator is activated substantially completely by means of the exothermic heat generated by the second activator.

11. A resin system as claimed in claim 10, **characterised by** the features of at least one of claims 3 to 6 and 9.

12. A use of a resin system as claimed in claim 10 or 11 being processed by a method as claimed in any one of claims 1 to 9 for producing rather large-scale plastics mouldings or products such as boats or hulls, blades of windmills, pipes and the like.
